# EUROPÄISCHE PATENTANMELDUNG

(11) **EP 1 952 870 A2**
(43) Veröffentlichungstag der Anmeldung: **06.08.2008**
(21) Anmeldenummer: 07019822.1
(22) Anmeldetag: 10.10.2007
(51) Int. Cl.: B01D 35/30, B01D 46/00

(54) **Rahmen und Kassettenfilter**

(30) Priorität: 02.02.2007 DE 102007006103
(71) Anmelder: Carl Freudenberg KG, 69469 Weinheim (DE)
(72) Erfinder: Kempf, Jürgen, 68519 Viernheim (DE); Kaffenberger, Rainer, 64385 Reichelsheim (DE)

(57) **Zusammenfassung**

Ein Rahmen zur Aufnahme eines Filterelements, umfassend vier Wandelemente (1, 2), die an Mbntagekanten (3, 4) aneinanderliegen und eine umlaufende Wandung (5) ausbilden, ist im Hinblick auf die Aufgabe, einen Rahmen zur Aufnahme eines Filterelemts zu schaffen, welcher nach kostengünstiger Herstellung problemlos montierbar ist, dadurch gekennzeichnet, dass jeweils zwei Wandelemente (1, 2) identisch ausgebildet sind. Des weiteren ist ein Kassettenfilter angegeben.

## Beschreibung

### Technisches Gebiet

Die Erfindung betrifft einen Rahmen zur Aufnahme eines Filterelements, umfassend vier Wandelemente, die an Montagekanten aneinanderliegen und eine umlaufende Wandung ausbilden. Die Erfindung betrifft des weiteren einen Kassettenfilter, der einen solchen Rahmen umfasst.

### Stand der Technik

Kassettenfilter der eingangs genannten Art sind aus dem Stand der Technik bereits bekannt. Beispielsweise zeigt die EP 1 414 547 B1 einen Kassettenfilter, der aus relativ vielen Bauteilen besteht.

Die gattungsbildenden Rahmen sind nicht kostengünstig herstellbar, da sie aus einer Vielzahl von Einzelbauteilen bestehen, die in aufwendiger Weise gefertigt werden müssen.

### Darstellung der Erfindung

Der Erfindung liegt daher die Aufgabe zugrunde, einen Rahmen zur Aufnahme eines Filterelemts zu schaffen, welcher nach kostengünstiger Herstellung problemlos montierbar ist.

Erfindungsgemäß wird die voranstehende Aufgabe durch einen Rahmen mit den Merkmalen des Patentanspruchs 1 gelöst, Danach sind jeweils zwei Wandelemente identisch ausgebildet.

Erfindungsgemäß ist erkannt worden, dass die Ausbildung jeweils zweier identischer Wandelemente sowohl die Fertigung der Wandelemente als auch deren Lagerhaltung erheblich vereinfacht. Insbesondere ist erkannt worden, dass zwei jeweils identische Wandelemente, die zumindest im Bereich ihrer Montagekanten komplementär zu zwei weiteren identischen Wandelementen ausgestaltet sind, problemlos montierbar sind, da auf weitere Bauteile zur Fixierung der Wandelemente verzichtet werden kann. Insoweit ist ein Rahmen angegeben, der nach kostengünstiger Herstellung problemlos montierbar ist.

Folglich ist die eingangs genannte Aufgabe gelöst.

An den Montagekanten könnten Mittel zur Fixierung und Verbindung der Wandelemente ausgebildet sein. Diese konkrete Ausgestaltung erlaubt es, einen Rahmen zu fertigen, der ausschließlich aus vier Bauteilen, nämlich den Wandelementen, besteht. Die Mittel zur Fixierung und Verbindung der Wandelemente könnten in den Montagekanten integriert sein beziehungsweise aus diesen herausgeformt sein. Diese konkrete Ausgestaltung erlaubt einen kompakten Aufbau des Rahmens und eine verliersichere Zuordnung der Mittel zur Fixierung und Verbindung zu den Wandelementen.

An den Montagekanten könnten Mittel zum Verrasten der Wandelemente ausgebildet sein. Mittel zum Verrasten erlauben eine lösbare Verbindung der Wandelemente. Des weiteren erlauben Mittel zum Verrasten der Wandelemente eine schnelle Fixierung und Verbindung der Wandelemente. Durch das Vorsehen von Mitteln zum Verrasten an den Wandelementen kann der Rahmen besonders schnell montiert werden.

Jeweils zwei Wandelemente könnten Rastzungen und jeweils zwei Wandelemente Aufnahmen für die Rastzungen aufweisen. Die Ausbildung von Rastzungen erlauben einen Eingriff in die Aufnahmen und damit eine feste Anbindung der Wandelemente aneinander. Die Ausbildung von Rastzungen ist des Weiteren vorteilhaft, da diese relativ leicht deformiert und umgebogen werden können, um die Wandelemente voneinander zu lösen oder aneinander zu montieren. Ganz konkret ist vor diesem Hintergrund denkbar, das Rastzungen vorgesehen sind, die einen Durchgang aufweisen, in den eine Erhebung eines Wandelementes eingreifen kann. Der Durchgang kann kreisförmig ausgebildet sein und die Aufnahme als kreisförmige Erhebung, die in den Durchgang eingreift. Diese konkrete Ausgestaltung ist im Hinblick auf die Fertigung besonders vorteilhaft, da runde Durchgänge problemlos in einem Spritzgießprozess angebracht werden können,

An den Wandelementen könnten Einführschrägen angeordnet sein. Die Anordnung von Einführschrägen erlaubt eine problemlose Montage des Rahmens in ein Rahmengehäuse, insbesondere in ein sogenanntes Filterhaus. Der Rahmen kann mittels der Einführschrägen ohne Verkantungen in einer Aufnahme eines Filterhauses eingeführt werden. Die Einführschrägen könnten derart an den Wandelementen angeordnet sein, dass sie eine umlaufende Rampe beziehungsweise Phase ausbilden.

Den Wandelementen könnten Verstärkungsrippen zugeordnet sein. Die Anordnung von Verstärkungsrippen erlaubt es, die Wandelemente mit einer dünnen Wandstärke herzustellen. Hierdurch kann Material eingespart werden. Vor diesem Hintergrund ist denkbar, dass die Verstärkungsrippen zur Innenseite des Rahmens hingewandt sind. Hierdurch ist sicher gestellt, dass die Aussenwandung des Rahmens glatt ausgebildet ist. Diese Ausgestaltung erlaubt ein nahezu widerstandsfreies Einführen des Rahmens in ein Filterhaus.

An zumindest zwei Wandelementen könnten Montagegriffe angeordnet sein. Die Ausbildung von Montagegriffen erlaubt eine problemlose Montage und Demontage des Rahmens im Filterhaus, da die montierende Person den Rahmen an den Montagegriffen ergreifen und bewegen kann.

Zumindest zwei Wandelemente könnten Rückhaltestege ausweisen. Die Rückhaltestege verhindern, dass auf die Wandelemente aufgetragenes Polyurethan aus dem montierten Rahmen herausfliessen kann. Neben Polyurethanen sind weitere Materialien denkbar, welche ein Filterelement mit den Wandelementen verbinden können.

Die Wandelemente könnten von der Wandung abragende Leisten aufweisen. Diese konkrete Ausgestaltung erlaubt eine flanschartige Ausbildung eines Kopfrahmens, der eine Anlage des Rahmens an der Wandung eines Filterhauses erlaubt.

Die Leisten könnten glatte Flächen aufweisen, an denen Dichtungen angebracht sind, die am Filterhaus zur Anlage kommen. Die Dichtungen bewirken eine dichtende Anlage des Rahmens am Gehäuse des Filterhauses. Die Dichtungen könnten auf die Flächen aufgespritzt sein, um eine rasche Fertigung der Dichtungen zu ermöglichen.

Die Leisten könnten ein U-Profil aufweisen, hohl sein und konkav ausgebildete Stabilisierungsstege aufweisen. Die hohle Ausbildung erlaubt es, Gewicht einzusparen. Die Vorkehrung von Stabilisierungsstegen verhindert, dass die Leisten zusammengedrückt und dadurch beschädigt werden. Die konkave Ausbildung der Stabilisierungsstege, bewirkt dass diese nach innen versetzt sind. Durch diese konkrete Ausgestaltung kann sich eine montierende Person nicht an den Stabilisierungsstegen verletzen. Die Verletzungsgefahr wird des weiteren durch deren konkave, nämlich abgeflachte Ausbildung unterbunden. Die Versetzung der Stabilisierungsstege nach innen bewirkt auch, dass bei der Montage des Rahmens Schrauben, Federn oder ähnliches nahezu nicht an den Stabilisierurigsstegen anstossen können. Hierdurch wird die Montage des Rahmens im Filterhaus erheblich erleichtert.

Die Leisten könnnten einen Kopfrahmen ausbilden. Der Kopfrahmen kann die Anlage des Rahmens in einem Filterhaus bewirken.

Die Wandelemente könnten als Spritzgussteile ausgestaltet sein. Diese konkrete Ausgestaltung erlaubt eine schnelle und kostengünstige Fertigung der Wandelemente.

Ein Kassettenfilter könnte einen Rahmen umfassen, der hier beschrieben ist, sowie ein von dem Rahmen gehaltenes Filterelement. Ein solcher Kassettenfilter kann in ein Filterhaus eingesetzt werden, um Raumluft von Schwebeteilchen zu reinigen. Insbesondere ist es denkbar, den Kassettenfilter als Feinfilter einzusetzen.

Der Kassettenfilter könnte ein Faltenpaket aus zick-zackförmig gefaltetem Filterpapier oder Vliesstoff umfassen. Durch die Faltung wird die effektive Filterfläche erhöht.

Es gibt nun verschiedene Möglichkeiten, die Lehre der vorliegenden Erfindung auf vorteilhafte Weise auszugestalten und weiterzubilden. Dazu ist einerseits auf die nachgeordneten Patentansprüche und andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: einen Rahmen, der aus vier Wandelementen besteht,
- Fig. 2: ein Wandelement mit einem Rückhaltesteg, welches in dem Rahmen gemäß Fig. 1 eingebaut ist,
- Fig. 3: ein Wandelement mit Rastzungen, weiches in einem Rahmen gemäß Fig. 1 eingebaut ist, und
- Fig. 4: eine Ansicht zur Erläuterung eines Verfahrens zur Herstellung eines Kassettenfilters.

### Ausführung der Erfindung

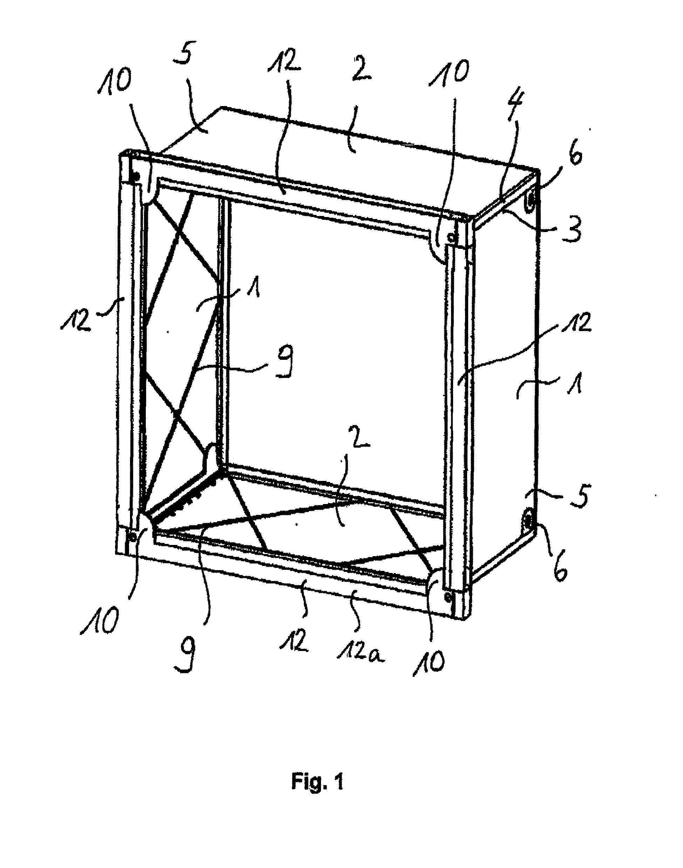

Fig. 1 zeigt einen Rahmen zur Aufnahme eines Filterelements, umfassend vier Wandelemente 1, 2, die an Montagekanten 3, 4 aneinanderliegen und eine umlaufende Wandung 5 ausbilden. Jeweils zwei Wandelemente 1, 2 sind identisch ausgebildet. Die Wandelemente 1, 2 sind im Bereich der Montagekanten 3, 4 komplementär zueinander ausgebildet und miteinander durch Verrastung verbunden.

An den Montagekanten 3, 4 sind Mittel 6, 7 zur Fixierung und Verbindung der Wandelemente 1, 2 ausgebildet. Jeweils zwei Wandelemente 1 weisen Rastzungen 6 und jeweils zwei Wandelemente 2 weisen Aufnahmen 7 für die Rastzungen auf.

Den Wandelementen 1, 2 sind innenliegende Verstärkungsrippen 9 zugeordnet. Hierdurch wird sichergestellt, dass die Wandung 5, die nach aussen gerichtet ist, eben ausgestaltet ist.

An zumindest zwei Wandelementen 1, 2 sind Montagegriffe 10 angeordnet, die der Montage und Demontage des Rahmens in einem Filterhaus dienen.

Die Wandelemente 1, 2 weisen von der Wandung 5 abragende Leisten 12 auf. Die Leisten 12 bilden einen Kopfrahmen aus, der flanschartig ausgestaltet ist und eine Anlage des Rahmens an der Wandung eines nicht gezeigten Filterhauses erlaubt.

Die Wandelemente sind als Spritzgussteile ausgestaltet. In das Innere des Rahmens kann ein nicht gezeigtes Filterelement 14 eingefügt werden.

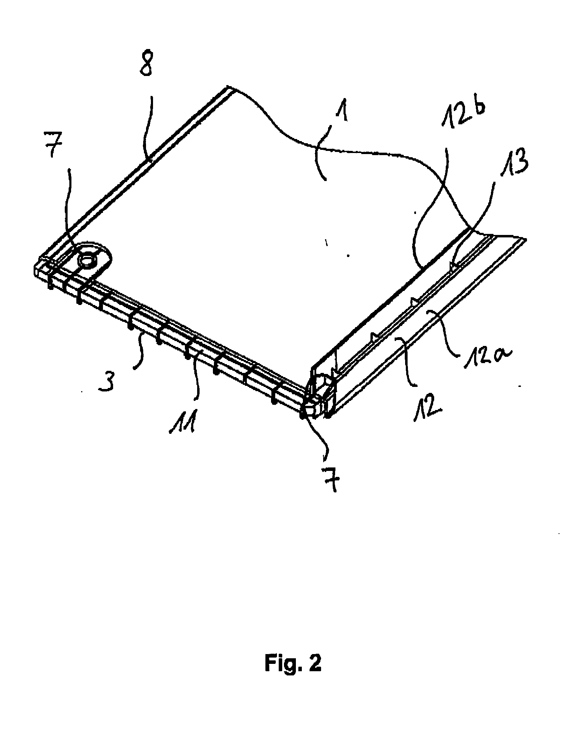

Fig. 2 zeigt eines der Wandelemente 1, die im Rahmen gemäß Fig. 1 eingebaut sind. Das Wandelement 1 weist Aufnahmen 7 für nicht gezeigte Rastzungen auf. Am Wandelement 1 ist eine Einführschräge 8 angeordnet, die sich mit den anderen Wandelementen 1, 2 zu einer umlaufenden Rampe ergänzt.

Das Wandelement 1 weist einen Rückhaltesteg 11 auf, der verhindert, dass aus dem Rahmen im zusammengebauten Zustand Polyurethan ausdringen kann.

Das Wandelement 1 weist eine von der Wandung 5 abragende Leiste 12 auf, die ein U-Profil zeigt. Die Leiste 12 ist hohl und konkav ausgebildete, nach innen versetzte Stabilisierungsstege 13 auf. Diese Stabilisierungsstege 13 verhindern, dass die Leiste 12 zusammengedrückt werden kann. Das Wandelement 1 ist als Spritzgussteil ausgestaltet.

Auf den ebenen Flächen 12a und 12b der Leiste 12 können Dichtungen angebracht sein. Die Dichtungen können aufgespritzt sein. Die Fläche 12b liegt der Fläche 12a gegenüber.

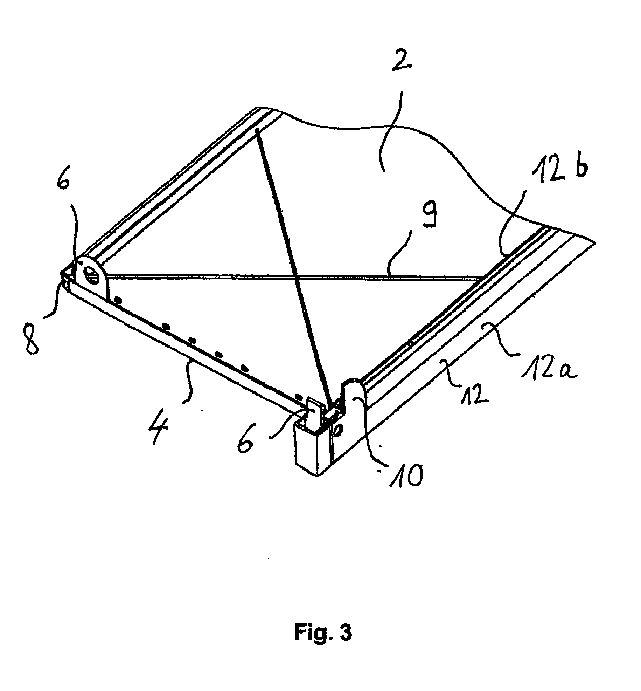

Fig. 3 zeigt eines der Wandelemente 2, die im Rahmen gemäß Fig. 1 eingebaut sind. Das Wandelement 2 weist Rastzungen 6 auf, die in Aufnahmen 7 eines Wandelements 1 eingreifen können. Eine der Rastzungen 6 weist einen runden Durchgang auf, in den eine runde Erhebung 7 des Wandelements 1 gemäß Fig. 2 eingreifen kann. Eine andere Rastzunge 6 ist als Rasthaken ausgebildet, der einen nicht gezeigten Steg im Wandelement 1 hintergreifen kann.

Das Wandelement 2 weist eine Einführschräge 8 auf, die sich mit den Einführschrägen 8 der Wandelemente 1 und 2 zu einer umlaufenden Rampe ergänzt. Das Wandelement 2 zeigt Verstärkungsrippen 9. Dem Wandelement 1 gemäß Fig. 2 sind ebenfalls Verstärkungsrippen 9 zugeordnet, die jedoch nicht sichtbar sind, da Fig. 2 die ebene Wandung des Wandelements 1 zeigt.

Das Wandelement 2 weist Montagegriffe 10 auf, die viertelkreisförmig ausgestaltet sind. Im verrasteten Zustand bildet der viertelkreisförmige Montagegriff 10 einen abgerundeten Eckbereich des Rahmens aus. Das Wandelement 2 weist eine von der Wandung 5 abragende Leiste 12 auf, die einen Kopfrahmen ausbilden kann. Das Wandelement 2 ist als Spritzgussteil ausgestaltet.

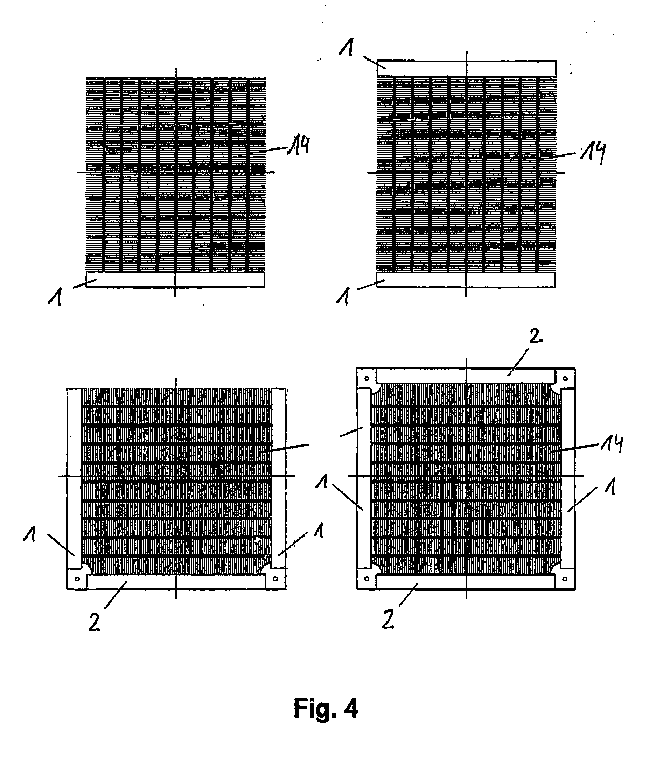

Fig. 4 zeigt in einer erläuternden Ansicht die einzelnen Fertigungsschritte zur Herstellung eines Kassettenfilters, der ein Filterelement 14 umfasst.

### Das Verfahren umfasst die folgenden Fertigungsschritte:

Bereitstellen eines Wandelementes 1 und Befüllen dessen innerer Wandung mit Polyurethan. Aufsetzen des Filterelements 14 auf das Wandelement 1. Aufsetzen eines weiteren Wandelement 1 auf das Filterelement 14, wobei das weitere Wandelement 1 ebenfalls mit Polyurethan befüllt ist. Die an dem Filterelement 14 angeordneten Wandelemente 1 werden mit einem Wandelement 2, welches ebenfalls mit Polyurethan befüllt ist, verrastet. Schließlich wird ein weiteres Wandelement 2 mit den Wandelementen 1 verrastet. Auch das letzte Wandelement 2 ist mit Polyurethan befüllt.

Das hier beschriebene Verfahren erlaubt die Fertigung eines Kassettenfilters, der einen hier beschriebenen Rahmen und ein von dem Rahmen gehaltenes Filterelement 14 aufweist.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ausdrücklich hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Rahmen zur Aufnahme eines Filterelements, umfassend vier Wandelemente (1, 2), die an Montagekanten (3,4) aneinanderliegen und eine umlaufende Wandung (5) ausbilden, **dadurch gekennzeichnet, dass** jeweils zwei Wandelemente (1, 2) identisch ausgebildet sind.

2. Rahmen nach Anspruch 1, **dadurch gekennzeichnet, dass** an den Montagekanten (3, 4) Mittel (6, 7) zur Fixierung und Verbindung der Wandelemente (1, 2) ausgebildet sind.

3. Rahmen nach Anspruch 1 oder 2, **dadurch gekennzeichnet, dass** an den Montagekanten (3, 4) Mittel (6, 7) zum Verrasten der Wandelemente (1, 2) ausgebildet sind.

4. Rahmen nach Anspruch 2 oder 3, **dadurch gekennzeichnet, dass** jeweils zwei Wandelemente (1) Rastzungen (6) und jeweils zwei Wandelemente (2) Aufnahmen (7) für die Rastzungen (6) aufweisen.

5. Rahmen nach einem der Ansprüche 1 bis 4, **dadurch gekennzeichnet, dass** an den Wandelementen (1, 2) Einführschrägen (8) angeordnet sind.

6. Rahmen nach einem der Ansprüche 1 bis 5, **dadurch gekennzeichnet, dass** den Wandelementen (1, 2) Verstärkungsrippen (9) zugeordnet sind.

7. Rahmen nach einem der Ansprüche 1 bis 6, **dadurch gekennzeichnet, dass** an zumindest zwei Wandelementen (1, 2) Montagegriffe (10) angeordnet sind.

8. Rahmen nach einem der Ansprüche 1 bis 7, **dadurch gekennzeichnet, dass** zumindest zwei Wandelemente (1) Rückhaltestege (11) aufweisen.

9. Rahmen nach einem der Ansprüche 1 bis 8, **dadurch gekennzeichnet, dass** die Wandelemente (1, 2) von der Wandung (5) abragende Leisten (12) aufweisen.

10. Rahmen nach Anspruch 9, **dadurch gekennzeichnet, dass** die Leisten (12) ein U-Profil aufweisen, hohl sind und konkav ausgebildete Stabilisierungsstege (13) aufweisen.

11. Rahmen nach Anspruch 9 oder 10, **dadurch gekennzeichnet, dass** die Leisten (12) einen Kopfrahmen ausbilden.

12. Rahmen nach einem der Ansprüche 1 bis 11, **dadurch gekennzeichnet, dass** die Wandelemente (1, 2) als Spritzgussteile ausgestaltet sind.

13. Kassettenfilter, umfassend einen Rahmen nach einem der vorangehenden Ansprüche und einen von dem Rahmen gehaltenen Filterelement.
